# EUROPEAN PATENT APPLICATION

(11) **EP 1 114 661 A2**
(43) Date of publication of application: **11.07.2001**
(21) Application number: 00127768.0
(22) Date of filing: 19.12.2000
(51) Int. Cl.: A63H 17/26, F16D 3/38

(54) **System for connecting cardan joints by frictional insertion to rotating parts like shafts**

(30) Priority: 07.01.2000 IT TO000010
(71) Applicant: ALESSANDRO QUERCETTI & C. Fabbrica Giocattoli Formativi - S.p.A., 10152 Torino (IT)
(72) Inventor: Quercetti, Alessandro, 10133 Torino (IT)
(74) Representative: Patrito, Pier Franco, Dr. Ing.

(57) **Abstract**

An element formed of plastic matter, intended to be used in a system of elements for composing, by frictional insertion, static or dynamic constructions having a game or didactic purpose, this element forming a cardan joint (A) which comprises a first fork (10), a second fork (20) and an intermediate member (70) connected (in the operative conditions) to the first fork (10) by pivots (71) perpendicular to the axis of the first fork and connected (in the operative conditions) to the second fork (20) by pivots (72) perpendicular to the axis of the second fork, the pivots (72) for connection,to the second fork being perpendicular to the pivots (71) for connection to the first fork, and each fork being provided, at its end opposite the region for connection to the intermediate member, with coupling members (14,24) acting by frictional insertion, conforming a specific system for the composition of constructions. Preferably the coupling member of at least one of the forks conforms the system of composable elements described in EP-A-1.022.040. These elements allow both transmitting a movement between differently oriented movable parts, and installing differently oriented elements or element groups in a construction composed by means of elements of plastic matter connected by frictional insertion.

## Description

The present invention has for its object a cardan joint intended to be used in a system of elements for composing, by frictional insertion, static or dynamic constructions having a game or didactic purpose.

Many systems of plastic matter elements are know, that may be mutually connected by frictional insertion and allow composing static structures, to which dynamic elements may be applied too. In most of these systems, the normal elements may be mutually connected only along a number of directions which differ from one another by displacements of 90°, and in those cases in which it is required to arrange the elements according to a different angle, this cannot be obtained by using the normal system elements, and special elements intended to this purpose should be foreseen.

In a particularly improved system of elements that may be composed by frictional insertion, which is described in EP-A-1.022.040, a specific choice of male coupling members having a symmetry of order four, cooperating with female elements having a symmetry of order eight, allows arranging the normal elements according to a number of directions which differ from one another by displacements of 45° only, thus increasing in a large measure the system versatility with respect to the element systems wherein the normal elements may be mutually connected only along a number of directions which differ from one another by displacements of 90°. Nevertheless, not even in such an improved system there is the possibility of arranging the elements or element groups according to angles chosen at will. For example, if a construction requires installing struts or stiffening diagonal members, these latter can be only inclined by 45°, whereas in many cases a different inclination would be preferable. Moreover, the transmission of a movement between shafts forming a relative angle, or not aligned, is possible only by using mutually meshing toothed wheels, which however may cause a not allowable encumbrance.

Therefore, a first object of this invention is to provide an element for use in a system of plastic matter elements, in order to compose by frictional insertion static or dynamic constructions, which should allow installing elements or element groups according to angles substantially independent from the orientation of the other construction elements. Another object of the invention is to provide such an element which should allow transmitting a movement between differently oriented shafts without having recourse to toothed wheels. Still another object of the invention is to provide such an element which may be adapted by the user himself to the use in different conditions. It is also an object of the invention to provide such an element which allows inserting, in a construction composed by a specific element system, some elements pertaining to a different element system. Finally, an object of the invention is to provide such an element which may be easily and economically manufactured and may be used without difficulties.

According to the invention, these objects are attained by means of an element made of plastic matter, forming a cardan joint which comprises a first fork, a second fork and an intermediate member connected (in the operative conditions) to the first fork by pivots perpendicular to the axis of the first fork and connected (in the operative conditions) to the second fork by pivots perpendicular to the axis of the second fork, the pivots for connection to the second fork being perpendicular to the pivots for connection to the first fork, and each fork being provided, at its end opposite the region for connection to the intermediate member, with coupling members acting by frictional insertion, conforming a specific system for the composition of constructions.

As it is known, a cardan joint (also named Hooke's joint) comprises a first fork, a second fork and an intermediate member connected to the first fork by pivots perpendicular to the axis of the first fork and connected to the second fork by pivots perpendicular to the axis of the second fork, the pivots for connection to the second fork being perpendicular to the pivots for connection to the first fork. The intermediate member may have different shapes: spider, ring, nut, ball, and others, and the pivots may be provided on the intermediate member or on the forks, without modifying the behavior of the joint. This joint allows transmitting a movement from a first shaft, connected to the first fork, to a second shaft connected to the second fork, and these shafts may form a relative angle, fixed or variable, and they are always concurrent in the point where intersect the axes connecting the intermediate element to the first and second forks. These joints, always made of metal, are used in various kinds of machines, and it is well known their particular use in the cardanic transmission shafts of automotive vehicles.

In the known embodiments, the cardan joints could in no way be used in the systems of plastic matter elements for composing, by means of frictional insertion, static or dynamic constructions. Moreover, there is known no use of cardan joints for installing elements or element groups, oriented according to arbitrary angles, when those elements do not have the character of dynamic members for transmitting a movement, but the character of static structural members.

The features according to the invention allow, therefore, a new advantageous application of the cardan joints, in a field wherein their use was precluded.

Preferably, the coupling member of at least one of the forks conforms the specific system of composable elements described in EP-A-1.022.040. This way, the element according to the present invention is suitable for being integrated in that system of composable elements.

In particular, the coupling member of at least one of the forks may comprise: - a group of pins suitable for being inserted in bores of a plate or of a wheel or a toothed wheel, or - surfaces ending with six edges, suitable for cooperating according to two orthogonal directions inside a wall having eight subsequent surfaces whose cross sections are arcuate, or - a tubular wall having eight subsequent surfaces whose cross sections are arcuate, or even - four hollow cylindrical sleeves having circular cross section.

Preferably, said forks have a capability of being elastically deformed, suitable for allowing intentional engagement and disengagement of the pivots connecting each fork to said intermediate member. This way, the user is allowed to change the forks of a cardan joint so as to provide, at will, different cardan joints having their coupling members suitable for composing any type of construction envisaged by the user.

Advantageously, said intermediate member comprises a ring having four outwardly projecting pivots, relatively perpendicular, lying in the plane of the ring and suitable for engaging in bores of said forks. This allows an easy and economical manufacture of the parts, and renders quick the composition of the joint by the user.

Therefore, the invention concerns: - a cardan joint element having the features set forth above, - its use in which the cardan joint is employed for transmitting a movement between differently oriented movable parts of a dynamic construction composed by means of elements of plastic matter connected by frictional insertion, - its use in which the cardan joint is employed for installing differently oriented elements or element groups in the static part of a construction composed by means of elements of plastic matter connected by frictional insertion, and finally - a system of plastic matter elements for composing, by means of frictional insertion, static or dynamic constructions having a game or didactic purpose, including said cardan joint elements.

These and other features, objects and advantages of the subject of the present invention will appear more clearly from the following description of some embodiments, having the character of non limiting examples, with reference to the appended drawings, wherein:
Figure 1 is a perspective view of a cardan joint element according to the invention, in its aligned configuration;
Figure 2 shows the same element in a configuration in which its-component parts are not aligned;
Figures 3 to 6 show different shapes of forks suitable for being used in connection with the system of composable elements according to EP-A-1.022.040;
Figures 7 and 8 show, by way of examples, two shapes of forks suitable for being used in connection with other systems of composable elements;
Figure 9 shows an intermediate member suitable for being used with a pair of forks comprising any two of the forks according to Figures 3 to 8; and
Figure 10 shows in an exploded view a cardan joint according to the present invention, inserted along with different composable elements according to EP-A-1.022.040.

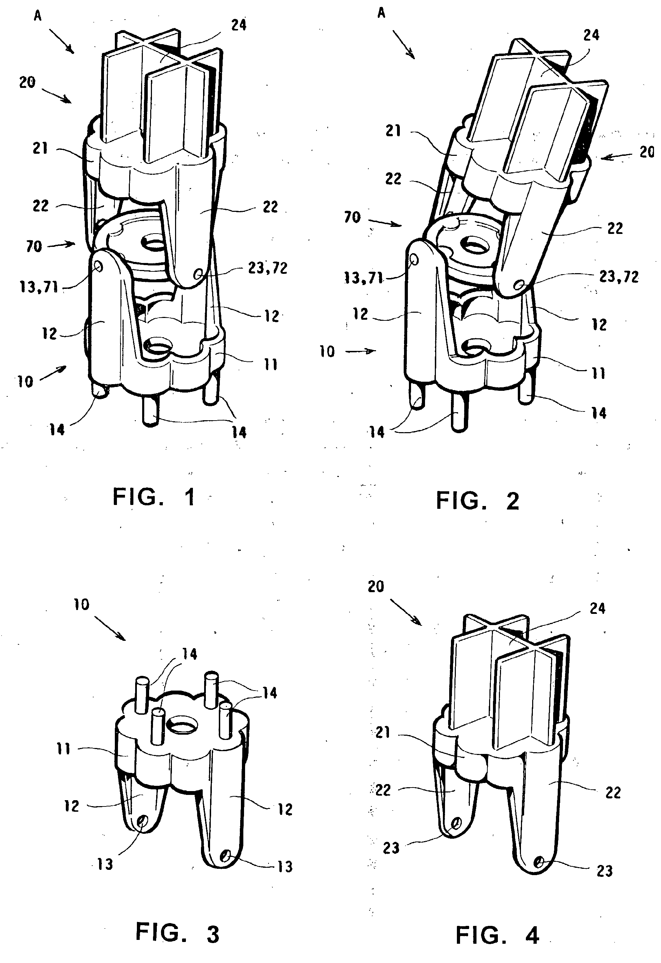

With reference to Figure 1, a cardan joint element according to the invention, designated in its whole by the letter A, comprises a first fork 10, a second fork 20 and an intermediate member 70 which, in the operating conditions here shown, are all aligned according to a common axis 0'-0". The intermediate member 70 is connected (in the operative conditions) with the first fork 10 by means of pivots 71 perpendicular to the axis 0' of the first fork 10, and it is connected (in the operative conditions) with the second fork 20 by means of pivots 72 perpendicular to the axis 0" of the second fork 20: the pivots 72 connecting to the second fork 20 are perpendicular to the pivots 71 connecting to the first fork.10. Each fork 10 or 20 is provided, at its end opposite the region of connection to the intermediate member 70, with coupling members acting by frictional insertion, conforming a system of elements for the composition of constructions, described later on.

Due to the pivots 71 and 72 which, in this embodiment, are provided on the intermediate member 70 and engage in correspondent bores of the . arms of the forks 10 and 20, the component parts 10, 20 and 70 of the cardan joint element A have a relative mobility. Therefore, the cardan joint element, which in Figure 1 is shown in its aligned configuration, in which the axis 0' of the first fork 10 and the axis 0" of the second fork 20, as well as the axis, not designed, of the intermediate member 70, are confused, may be freely deformed according to different directions, by assuming for example the configuration shown in Figure 2, wherein it is apparent that the axis 0" of the second fork 20 is no more confused with the axis 0' of the first fork 10.

Therefore, when the element A is inserted in the composition of a construction, the elements joined to the second fork 20 may be variously and freely oriented, within a large field, with respect to the elements to which has been joined the first fork 10. On one side, this allows to compose in this manner parts of the construction, such as for example struts or stiffening diagonal members, which are inclined in various manner with respect to the normal directions of the elements, and on the other side, in the case of dynamic parts of the construction, this allows to obtain the transmission of movements between movable elements which are not aligned or are oriented in different manner.

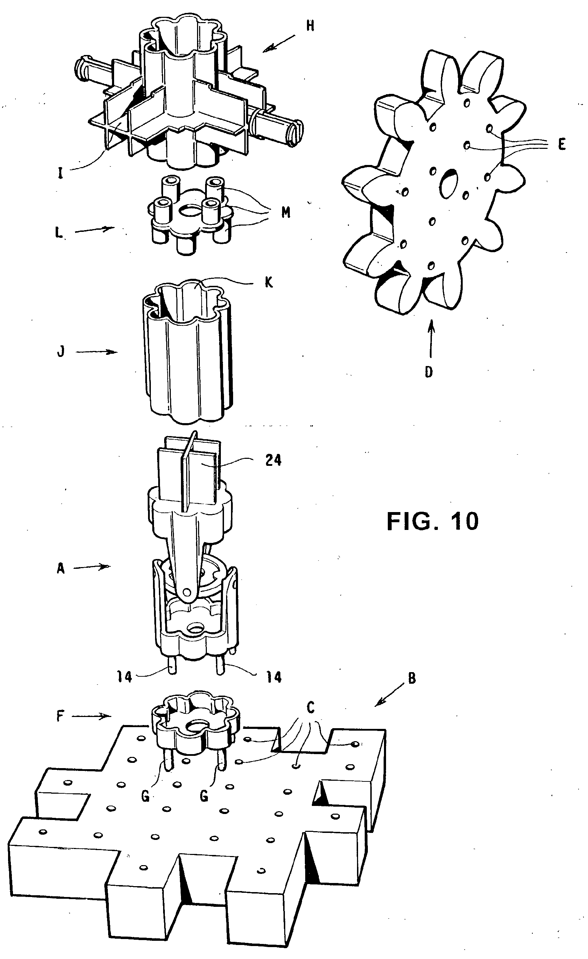

In Figure 10, a cardan joint element A according to the present invention is shown along with different elements being parts of the specific system of composable elements according to EP-A-1.022.040. It is evident how the element A may be coupled with the other elements of the system.

As it appears from Figures 1 and 2, each fork 10 and 20 is provided, in the region of connection with the intermediate member 70, with bores intended to house the pivots 71 and 72, and at the side opposite this region for connection it is provided with coupling members acting by frictional insertion, conforming a specific system of elements for the composition of constructions. These coupling members may have different shapes, as shown for example by Figures 3 to 8, each of which represents a single isolated fork.

Fork 10 according to Figure 3 is identical to fork 10 of Figures 1 and 2. It comprises a body 11 from which extend two arms 12 forming a fork, and each of these arms has, near its distal end, a bore 13 for the insertion of a pivot 71 or 72 of the intermediate member 70. The coupling members of this fork 10 comprise pins 14 (entirely similar to the pins G of an element F for connection to the base plate), which are arranged in such a way that they may be inserted in the bores C of a base plate B, or in the bores E of a wheel D (possibly toothed). Therefore the fork 10 may be used for rooting on a base plate B the elements which should be arranged (either fixed or movable) according to a direction inclined at will within the limits allowed by the cardan joint A. On the other hand, fork 10 may be connected to a wheel D in order to transmit thereto a movement coming from elements which are not aligned with that wheel.

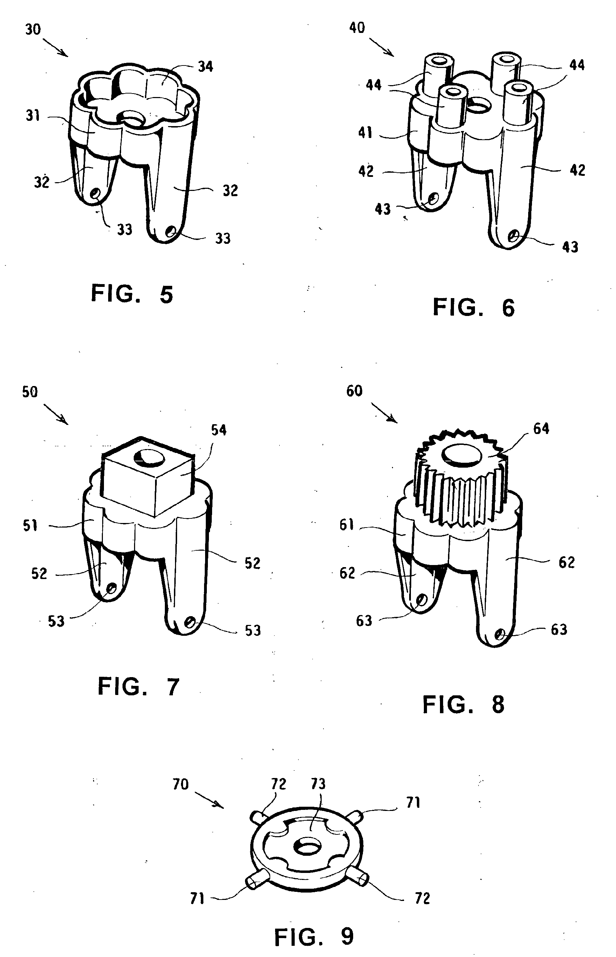

Fork 20 according to Figure 4 is identical to fork 20 of Figures 1 and 2. It comprises a body 21 from which extend two arms 22 forming a fork, and each of these arms has, near its distal end, a bore 23 for the insertion of a pivot 71 or 72 of the intermediate member 70. The coupling members of this fork 20 comprise coupling surfaces 24 (entirely similar to the surfaces I of a complex element H) ending with six edges so arranged that they may cooperate according to two orthogonal directions inside female coupling members whose surfaces comprise eight subsequent arcs (as the elements J).

It will be noted that the axial length of the coupling surfaces 24 is considerably larger than the measure strictly needed for coupling. This allows, by incompletely inserting the parts, to attain a certain regulation of the axial length of an element group, and this is particularly useful in the case of inclined groups, whose length not always can correspond to the system modularity. Moreover, in the case of dynamic constructions, some little changes in length may take place during the movement.

Of course, the provision of establishing for the coupling members a length larger than the needed minimum length may be extended to the coupling members different from the coupling members 24, which will be described later on.

Fork 30 according to Figure 5 comprises a body 31 from which extend two arms 32 forming a fork, and each of these arms has, near its distal end, a bore 33 for the insertion of a pivot 71 or 72 of the intermediate member 70. The coupling members 34 of this fork 30 are female coupling members, and they comprise eight subsequent arcs, similarly to the coupling members K of the elements J being the spacing element of the system.

Fork 40 according to Figure 6 comprises a body 41 from which extend two arms 42 forming a fork, and each of these arms has, near its distal end, a bore 43 for the insertion of a pivot 71 or 72 of the intermediate member 70. The coupling members 44 of this fork 40 comprise a group of four hollow cylindrical sleeves suitable for engaging inside surfaces comprising eight subsequent arcs, similarly to the coupling members M of the joining elements L of the system.

All the embodiments described till now conform the system of elements described in EP-A-1.022.040. However, the forks of the cardan joint element according to the invention may also be provided with coupling members conforming other systems of composable elements. Two examples are given by the forks according to the Figures 7 and 8.

Fork 50 according to Figure 7 comprises a body 51 from which extend two arms 52 forming a fork, and each of these arms has, near its distal end, a bore 53 for the insertion of a pivot 71 or 72 of the intermediate member 70. The coupling members.54 of this fork 50 comprise a parallelepipedal projection suitable for engaging inside a corresponding cavity of a female coupling member of the elements of a system which makes use of these coupling means.

Fork 60 according to Figure 8 comprises a body 61 from which extend two arms 62 forming a fork, and each of these arms has, near its distal end, a bore 63 for the insertion of a pivot 71 or 72 of the intermediate member 70. The coupling members 64 of this fork 60 comprise a projection having the shape of a toothed cylinder (a so-called withworth joint), suitable for engaging inside a corresponding cavity of a female coupling member of the elements of a system which makes use of these coupling means.

With all the described forks may cooperate an intermediate member 70 according to Figure 9. This member comprises a ring body 73 from which peripherally project four pivots 71 and 72, facing outwards, which lie in the same plane of ring 73; they form two pair of coaxial pivots, and the two pairs are relatively perpendicular. This intermediate member is intended to be provided with two forks, which may be chosen at will among the available forks (for example the forks according to Figures 3 to 8). The pivots 71 are inserted in the bores of the arms of one of the forks, and the pivots 72 are inserted in the bores of the arms of the other fork. This way is composed a cardan joint element A as shown in Figures 1, 2 and 10. In order to connect the forks to the intermediate member, the arms of the forks have a limited capability of being elastically deformed. The composition of the cardan joint element with the three component parts described may be done by the user, by choosing the kinds of forks (namely, the coupling members shown by them) according to the need of the envisaged construction. Therefore, in the element system, the cardan joint elements may be contained either in assembled form or. in the form of separate component parts.

It may be remarked that, by an appropriate choice of the coupling members shown by the forks, it is even possible to insert, in a construction composed by a specific element system, to which corresponds the coupling member of one of the forks, some elements pertaining to a different element system, to which corresponds the coupling member of the other fork.

It is of advantage that the body of the forks has an outline. corresponding to the outline of the other elements of the system. Thus, for the forks intended to be inserted in the specific system of composable elements according to EP-A-1.022.040, the outline of the fork body is preferably defined by eight subsequent arcs, as shown by the figures 1 to 6 and 10.

It is to be understood that the invention is not limited to the embodiments described and shown by way of examples. Many modifications have been stated, and others are within the capacity of those skilled in the art. For example, the body of the intermediate member may have the shape of a disk, a ball or a cross, rather than the shape of a ring, and the pivots 71 and 72 may be provided on the arms of the forks in order to cooperate with bores hollowed in the intermediate member, or even these pivots may consist in pins intended to be inserted both in bores of the fork arms and in bores of the intermediate element. In this latter case, it is not needed that the arms of the forks have a certain capacity of being elastically deformed in order to allow assembling the cardan joint element.

These and other changes, and any replacement by technically equivalent means, may be introduced without departing from the spirit of the invention and the scope of this Patent, as defined by the Claims.

## Claims

1. An element formed of plastic matter, intended to be used in a system of elements for composing, by frictional insertion, static or dynamic constructions having a game or didactic purpose, characterized in that this element forms a cardan joint (A) which comprises a first fork (10), a second fork (20) and an intermediate member (70) connected (in the operative conditions) to the first fork (10) by pivots (71) perpendicular to the axis (0') of the first fork (10) and connected (in the operative conditions) to the second fork (20) by pivots (72) perpendicular to the axis (0") of the second fork (20), the pivots (72) for connection to the second fork (20) being perpendicular to the pivots (71) for connection to the first fork (10), and each fork (10,20,30,40,50,60) being provided, at its end opposite the region for connection to the intermediate member (70), with coupling members (14,24,34,44,54.64) acting by frictional insertion, conforming a specific system for the composition of constructions.

2. A cardan joint element as set forth in Claim 1, characterized in that the coupling member (14,24,34,44) of at least one of the forks (10,20,30,40) conforms the system of composable elements described in EP-A-1.022.040.

3. A cardan joint element as set forth in Claim 1, characterized in that the coupling member (14) of at least one of the forks (10) comprises a group of pins (14) suitable for being inserted in bores (C,E) of a plate (B) or of a wheel or toothed wheel (D).

4. A cardan joint element as set forth in Claim 1, characterized in that the coupling member (24) of at least one of the forks (20) comprises surfaces (24) ending with six edges, suitable for cooperating according to two orthogonal directions inside a wall (K) having eight subsequent surfaces whose cross sections are arcuate.

5. A cardan joint element as set forth in Claim 1, characterized in that the coupling member (34) of at least one of the forks (30) comprises a tubular wall (34) having eight subsequent surfaces whose cross sections are arcuate.

6. A cardan joint element as set forth in Claim 1, characterized in that the coupling member (44) of at least one of the forks (40) comprises four hollow cylindrical sleeves (44) having circular cross section.

7. A cardan joint element as set forth in Claim 1, characterized in that the coupling member (14,24,34,44,54,64) of at least one of the forks (10,20, 30,40,50,60) has an axial length somewhat larger than the minimum length needed for coupling, in order to allow a certain modification of the axial length of a group of elements which is connected to that fork.

8. A cardan joint element as set forth in Claim 1, characterized in that said forks (10,20,30,40,50,60) have a capability of being elastically deformed, suitable for allowing intentional engagement and disengagement of the pivots (71,72) connecting each fork to said intermediate member (70).

9. A cardan joint element as set forth in Claim 1, characterized in that said intermediate member (70) comprises a ring (73) having four outwardly projecting pivots (71,72), relatively perpendicular, lying in the plane of the ring (73) and suitable for engaging in bores (13,23,33,43,53,63) of said forks (10, 20,30.40.50.60).

10. Use of a cardan joint element as set forth in one or more of the foregoing Claims, wherein the cardan joint (A) is employed for transmitting a movement between differently oriented movable parts of a dynamic construction composed by means of elements of plastic matter connected by frictional insertion.

11. Use of a cardan joint element as set forth in one or more of the Claims 1 to 9, wherein the cardan joint (A) is employed for installing differently oriented elements or element groups in the static part of a construction composed by means of elements of plastic matter connected by frictional insertion.

12. A system of plastic matter elements for composing, by means of frictional insertion, static or dynamic constructions having a game or didactic purpose, characterized in that it includes cardan joint elements (A) according to one or more of the Claims 1 to 9, or their component parts.
